# EUROPÄISCHE PATENTANMELDUNG

(11) **EP 1 512 517 A1**
(43) Veröffentlichungstag der Anmeldung: **09.03.2005**
(21) Anmeldenummer: 04010035.6
(22) Anmeldetag: 28.04.2004
(51) Int. Cl.: B29C 51/20, B29C 51/26

(54) **Verfahren und Vorrichtung zum Tiefziehen einer Formfolie**

(30) Priorität: 04.09.2003 DE 10341287
(71) Anmelder: UHLMANN PAC-SYSTEME GmbH & Co. KG, 88471 Laupheim (DE)
(72) Erfinder: Eck, Werner, Dr.-Ing., 88471 Laupheim (DE); Florczak, Werner, 88433 Schemmerhofen (DE); Damaschke, Norbert, 88451 Dettingen (DE)
(74) Vertreter: Hentrich, Swen Dipl.-Phys. Dr.

(57) **Zusammenfassung**

Die Erfindung ist ein Verfahren zum Formen einer Formfolie (10), bei dem die Formfolie (10) erwärmt und durchgeführt wird durch eine Formstation (1) mit einem oberen Formwerkzeug (3), einem ersten unteren Formwerkzeug (4) und einem zweiten unteren Formwerkzeug (5), bei dem für einen ersten zu formenden Abschnitt das obere Formwerkzeug (3) und das erste untere Formwerkzeug (4) zur Horizontalbewegung der Formfolie (10) synchronisiert und vertikal relativ zueinander zum Formen zur Anlage an die Formfolie (10) verstellt sowie während des Formens mit der Formfolie (10) mitbewegt werden, bei dem das erste untere Formwerkzeug (4) während des nachfolgenden Kühlens der erwärmten Formfolie (10) mit dieser mitbewegt wird, während das obere Formwerkzeug (3) in die Ausgangslage zurück bewegt wird, und bei dem das zweite untere Formwerkzeug (5) für den nachfolgenden zu formenden Abschnitt die Funktion des ersten unteren Formwerkzeugs (4) übernimmt, während das erste untere Formwerkzeug (4) wie zuvor das zweite untere Formwerkzeug (5) an dem anderen unteren Formwerkzeug (4, 5) vorbei in die Ausgangslage zurück bewegt wird. Weiterhin betrifft die Erfindung eine Vorrichtung zur Durchführung des Verfahrens.

## Beschreibung

Gegenstand der Erfindung ist ein Verfahren zum Formen einer Formfolie, bei dem die Formfolie erwärmt und durchgeführt wird durch eine Formstation mit einem oberen Formwerkzeug, einem ersten unteren Formwerkzeug und einem zweiten unteren Formwerkzeug, bei dem für einen ersten zu formenden Abschnitt das obere Formwerkzeug und das erste untere Formwerkzeug zur Horizontalbewegung der Formfolie synchronisiert und vertikal relativ zueinander zum Formen zur Anlage an die Formfolie verstellt sowie während des Formens mit der Formfolie mitbewegt werden, bei dem das erste untere Formwerkzeug während des nachfolgenden Kühlens der erwärmten Formfolie mit dieser mitbewegt wird, während das obere Formwerkzeug in die Ausgangslage zurückbewegt wird, und bei dem das zweite untere Formwerkzeug für den nachfolgenden zu formenden Abschnitt die Funktion des ersten unteren Formwerkzeugs übernimmt, während das erste untere Formwerkzeug wie zuvor das zweite untere Formwerkzeug an dem anderen unteren Formwerkzeug vorbei in die Ausgangslage zurückbewegt wird. Die Erfindung betrifft weiterhin eine Vorrichtung zur Durchführung dieses Verfahrens.

Aus dem Stand der Technik sind in Thermoformmaschinen eingesetzte Formstationen bekannt, die die erwärmte Formfolie taktweise mittels eines oberen Formwerkzeuges und eines unteren Formwerkzeuges verformen, wobei genau eine Vorschublänge der erwärmten Formfolie zwischen das obere Formwerkzeug und das untere Formwerkzeug transportiert und verformt wird. An die Verformung schließt sich eine Kühlung der erwärmten Formfolie an, um deren gebildete Formung zu konservieren. Allerdings ist wegen des getakteten Betriebes und der gewünschten hohen Taktrate die zeitliche Dauer der Kühlung sehr stark eingeschränkt, so daß die erwärmte Formfolie nicht vollständig bis auf die Umgebungstemperatur abgekühlt werden kann, was mit dem Nachteil verbunden ist, daß die Formfolie nach dem Lösen von dem oberen und dem unteren Formwerkzeug noch weiter abkühlt, dabei schrumpft und die Abmessungen der in der Formfolie ausgebildeten Näpfe verändert. Dies führt in weiteren Stationen der Thermoformmaschine zu Problemen und beeinträchtigt den Produktionsablauf.

Der Erfindung liegt daher die Aufgabe zugrunde, ein Verfahren anzugeben, durch das mit einer unzureichenden Kühlung der erwärmten Formfolie nach dem Formen verbundene Probleme vermieden werden. Aufgabe der Erfindung ist weiterhin, eine Vorrichtung bereit zu stellen, mit der ein derartiges Verfahren ausgeführt werden kann.

Der das Verfahren betreffende Teil der Aufgabe wird durch das eingangs genannte Verfahren gelöst, mit dem die Vorteile verbunden sind, daß dessen Einsatz nicht auf die konventionell getaktet betriebenen Thermoformmaschinen beschränkt ist, sondern insbesondere auch bei kontinuierlich vorgeschobener Formfolie Verwendung finden kann. Weiterhin entfällt die Beschränkung, daß die Kühldauer auf einen geringen Bruchteil eines Arbeitstaktes limitiert ist, sondern zeitlich länger ausgedehnt erfolgen kann während das untere Formwerkzeug der Formfolie anliegt und die Form der in der Formfolie ausgebildeten Näpfe nahezu bis zum Erreichen der Umgebungstemperatur bewahrt. Weiterhin bemerkenswert ist, daß durch die Verwendung zweier unterer Formwerkzeuge die Arbeitsleistung der Formstation nicht durch die zeitlich länger andauernde Kühlung beeinträchtigt wird, da abwechselnd die beiden unteren Formwerkzeuge für die Bearbeitung der Formfolie zur Verfügung stehen, wobei deren Einsatz so gewählt ist, daß stets eines der beiden unteren Formwerkzeuge der Formfolie anliegt, während das andere untere Formwerkzeug dieses Zeitintervall ausnutzt, um sich von der Formfolie zu lösen, entgegen der Vorschubrichtung der Formfolie in die Ausgangslage zurückzukehren um sich dort wieder mit der Formfolie zu synchronisieren.

Im Rahmen der Erfindung ganz besonders bevorzugt ist es, wenn das der Formfolie anliegende untere Formwerkzeug zur Kühlung der Folie genutzt wird, da dieses durch den unmittelbaren, langandauernden Kontakt mit der Formfolie dazu besonders geeignet ist.

Vorteilhaft ist weiterhin, wenn das der Formfolie anliegende untere Formwerkzeug zum Transport der Formfolie genutzt wird. Vorstehend ist dargelegt worden, daß das untere Formwerkzeug sich parallel zur Formfolie bewegt, so daß diese Bewegung auch dazu ausgenutzt werden kann, die Formfolie anzutreiben und einen separaten Formfolienantrieb in der Formstation einzusparen. Dabei wird darauf hingewiesen, daß auch bei einem kontinuierlichen Bandlauf der Formfolie deren gleichmäßiger Antrieb sichergestellt ist, da stets eines der beiden unteren Formwerkzeuge dieser anliegt und damit diese antreiben kann.

Der Antrieb der Formfolie durch die unteren Formerkzeuge läßt sich in einfacher Weise dadurch realisieren, daß die Formfolie mittels eines Unterdrucks mit dem anliegenden unteren Formwekzeug antriebsmäßig gekoppelt ist. Im Sinne einer erhöhten Betriebssicherheit ist es auch vorteilhaft, wenn der Formschluß des anliegenden unteren Formwerkzeuges mit den in der Formfolie ausgebildeten Näpfen für den Antrieb der Formfolie ausgenutzt wird.

Der die Vorrichtung betreffende Teil der Aufgabe wird gelöst durch eine Formstation, die dadurch gekennzeichnet ist, daß auf einem Stationsaestell ein oberes Formwerkzeug sowie ein erstes unteres Formwerkzeug und ein zweites unteres Formwerkzeug horizontal und vertikal verstellbar gelagert sind, daß jedem unteren Formwerkzeug ein eigener Horizontalantrieb zugeordnet ist, daß den beiden unteren Formwerkzeugen für die Vertikalbewegung eine gemeinsame Hebe- und Absenkvorrichtung sowie jeweils eine die unteren Formwerkzeuge in deren angehobener, der Formfolie anliegender Lage sichernde Arretiervorrichtung zugeordnet ist. Diese Formstation zeichnet sich insbesondere durch die Einfachheit ihres Aubaues und ihre Flexibilität bei der Ausführung des erfindungsgemäßen Verfahrens aus, da sich auch Formatwechsel ohne zeitaufwendige Eingriffe in den Produktionsablauf realisieren lassen. Für den Formatwechsel sind lediglich die Formwerkzeuge auszuwechseln, deren Bewegung innerhalb der Formstation gegenüber den zuvor verwendeten Formwerkzeugen durch die zugeordneten Horizontalantriebe in einfacher Weise angepasst werden kann, so daß es zu diesem Zwecke lohnend ist, zwei getrennte Horizontalantriebe vorzusehen. Nicht erforderlich ist allerdings, zwei getrennte Hebe- und Absenkvorrichtungen zu verwenden, so daß aus Platz- und Kostengründen die Verwendung einer gemeinsamen Hebe- und Absenkvorrichtung vorgesehen ist, die auch sicherstellt, daß zu dem Zeitpunkt, zu dem ein unteres Formwerkzeug von der Formfolie entfernt wird, das andere untere Formwerkzeug zur Anlage kommt. Die gemeinsame Hebe- und Absenkvorrichtung erfordert die Kombination mit den beiden Arretiervorrichtungen, damit die unteren Formwerkzeuge nicht jeder Bewegung der Hebe- und Absenkvorrichtung folgen, die pro Zyklus eines unteren Formwerkzeuges zweifach ihre Hub- und Senkbewegungen ausführt.

Um in besonders einfacher Weise die Bewegung der unteren Formwerkzeuge bei einem Formatwechsel anpassen zu können, sind die beiden dem unteren Formwerkzeug zugeordneten Horizontalantriebe durch Servomotoren gebildet, deren Ansteuerung bei einem Formatwechsel lediglich in geeigneter Weise angepasst werden muß.

Eine hinsichtlich der Einfachheit ihres Aufbaus bevorzugte Ausführungsform ist dadurch gekennzeichnet, daß die Hebe- und Absenkvorrichtung eine sich in Bewegungsrichtung der Formfolie erstreckende Leiste aufweist, an deren stromab liegenden Ende ein Zugorgan zum Eingreifen in das entsprechend stromab bewegte untere Formwerkzeug ausgebildet ist. Für die Hubbewegung eines unteren Formwerkzeuges bedarf es nur dessen Unterstützung durch die Hebe- und Absenkvorrichtung, bis das untere Formwerkzeug durch die Arretiervorrichtung in seiner Höhenlage gehalten wird. Zum Absenken des unteren Formwerkzeuges ist es durch die Verwendung der Arretiervorrichtung nicht ausreichend, lediglich den Kontakt der Hebe- und Absenkvorrichtung mit dem unteren Formwerkzeug wieder zu lösen; daher ist das Zugorgan vorgesehen, das es ermöglicht, daß die Hebe- und Absenkvorrichtung eine Kraft auf das untere Formwerkzeug ausübt, die die von der Arretiervorrichtung auf das untere Formwerkzeug ausgeübte Kraft übersteigt.

Um in einfacher Weise auch die Hebe- und Absenkvorrichtung an einen Formatwechsel anpassen zu können, ist das Zugorgan auf der Leiste in Längsrichtung verstellbar angeordnet.

Wiederum hinsichtlich der Einfachheit des Aufbaus ist vorgesehen, daß dem einen unteren Formwerkzeug auf der linken Seite des Stationsgestells und dem anderen unteren Formwerkzeug auf der rechten Seite des Stationsgestells eine Vertikalführung zugeordnet ist.

Dann bietet es sich an, daß die Arretiervorrichtung am oberen freien Ende der Vertikalführung angeordnet und als Klemmvorrichtung gestaltet ist, bei der durch Zug das untere Formwerkzeug freigegeben wird.

Weiterhin sind der Vertikalführung die Anschlüsse für die Kühlung und die Unterdruckversorgung des zugeordneten unteren Formwerkzeuges zugeordnet.

Im folgenden wird die Erfindung an einem in der Zeichnung dargestellten Ausführungsbeispiel näher erläutert; es zeigen:
- Fig. 1: eine perspektivische, schematische Darstellung der Formstation,

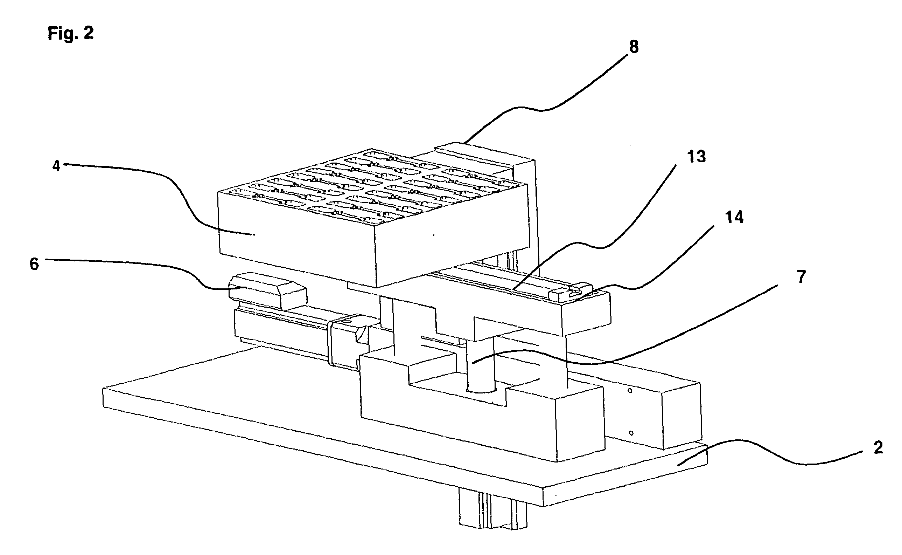

- Fig. 2: eine perspektivisch, isolierte Darstellung eines unteren Formwerkzeuges mit den zu dessen Verstellung erforderlichen Baugruppen,

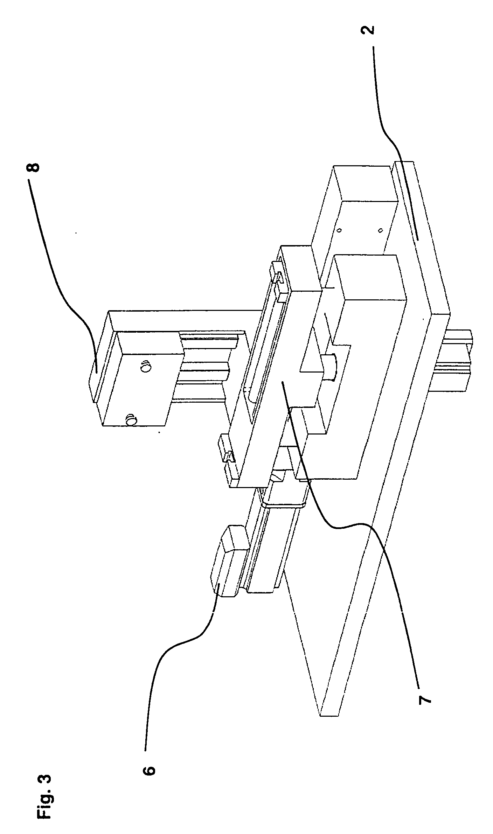

- Fig. 3: eine der Fig. 2 entsprechende Darstellung ohne das untere Formwerkzeug,

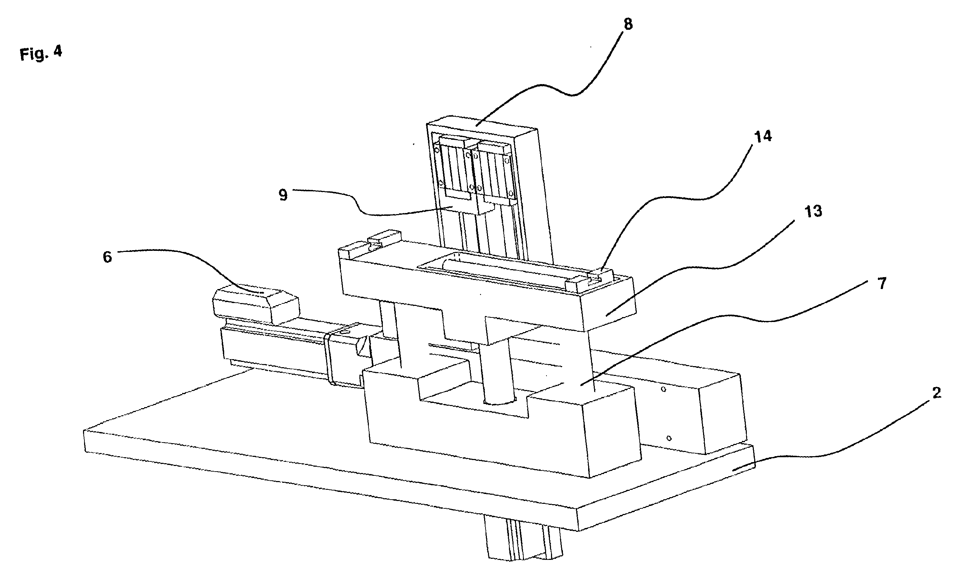

- Fig. 4: eine der Fig. 3 entsprechende Darstellung ohne die Arretiervorrichtung,

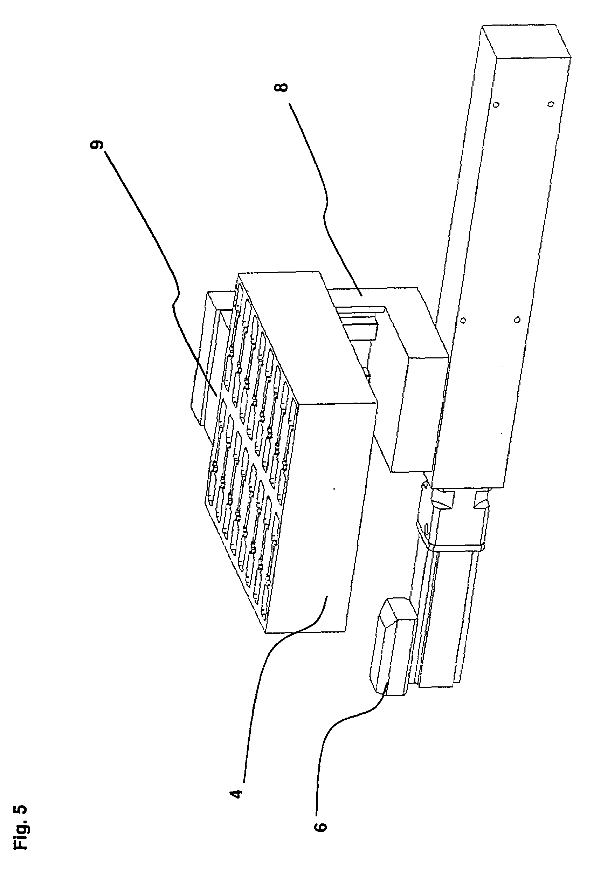

- Fig. 5: eine perspektivische, isolierte Darstellung eines unteren Formwerkzeuges mit dem Horizontalantrieb,

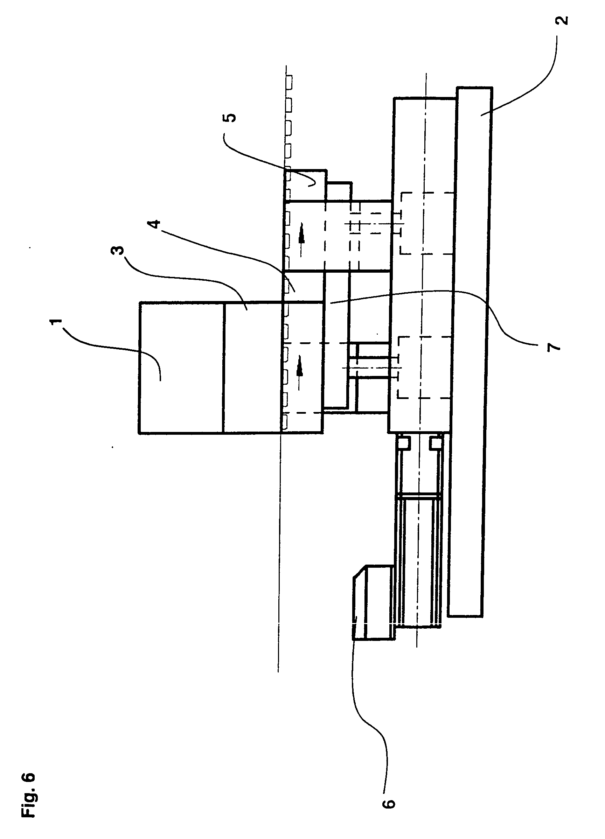

- Fig. 6: eine schematische Darstellung der erfindungsgemäßen Formstation in einer Seitenansicht, und
- Fig. 7A bis 7F: den Verfahrensablauf während eines vollständigen Zyklus in einer der Fig. 6 entsprechenden Darstellungsweise.

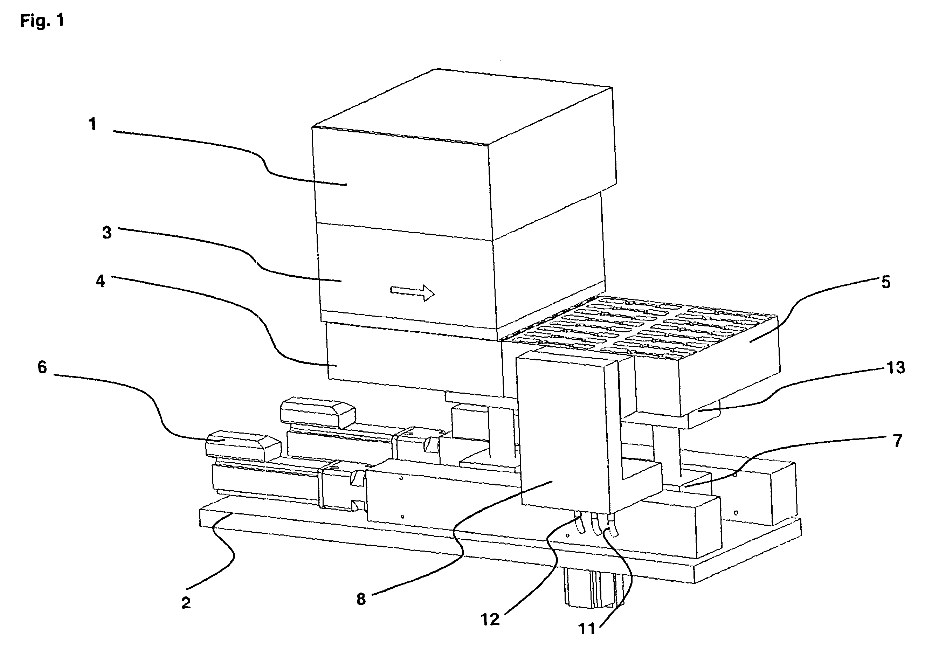

In Fig. 1 ist eine in Zusammenwirken mit einer selber nicht gezeigten Thermoformmaschine eingesetzte Formstation 1 dargestellt, die über ein Stationsgestell 2 verfügt, in dem ein oberes Formwerkzeug 3 sowie ein erstes unteres Formwerkzeug 4 und ein zweites unteres Formwerkzeug 5 horizontal und vertikal verstellbar gelagert sind. Jedem unteren Formwerkzeug 4, 5 ist ein eigener, durch einen Servomotor gebildeter Horizontalantrieb 6 zugeordnet. Dem einen unteren Formwerkzeug 4 ist auf der linken Seite des Stationsgestells 2 und dem anderen unteren Formwerkzeug 5 auf der rechten Seite des Stationsgestells 2 eine Vertikalführung 8 zugeordnet, die auf den Horizontalantrieben 6 platziert sind, und an deren oberen freien Ende eine Arretiervorrichtung 9 angeordnet ist, die als Klemmvorrichtung fungiert, um die unteren Formwerkzeuge 4, 5 in deren angehobener, der Formfolie 10 anliegender Lage zu sichern, wobei durch Zug das untere Formwerkzeug 4, 5 aus der Arretiervorrichtung 9 wieder freigegeben wird. Der Vertikalführung 8 sind Anschlüsse für die Kühlung 11 des unteren Formwerkzeuges 4, 5 sowie für dessen Versorgung 12 mit Unterdruck zugeordnet. Weiterhin verfügen die beiden unteren Formwerkzeuge 4, 5 für die Vertikalbewegung über eine gemeinsame Hebe- und Absenkvorrichtung 7.

Die Hebe- und Absenkvorrichtung 7 weist eine sich in Bewegungsrichtung der Formfolie 10 erstreckende Leiste 13 auf, an deren stromab liegenden Ende ein Zugorgan 14 zum Eingreifen in das entsprechend stromab bewegte untere Formwerkzeug 4, 5 ausgebildet ist, wobei das Zugorgan 14 auf der Leiste 13 in Längsrichtung für einen Formatwechsel verstellbar angeordnet ist.

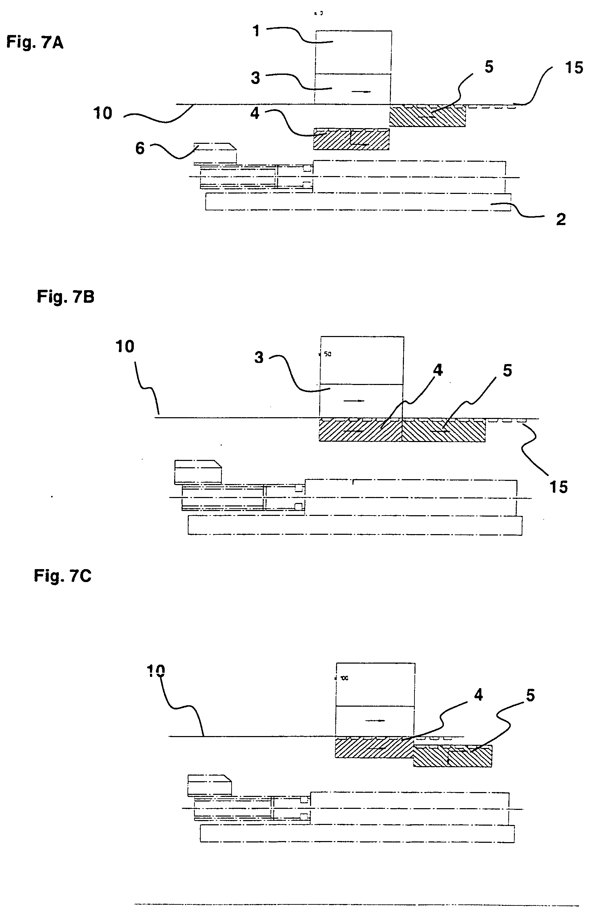

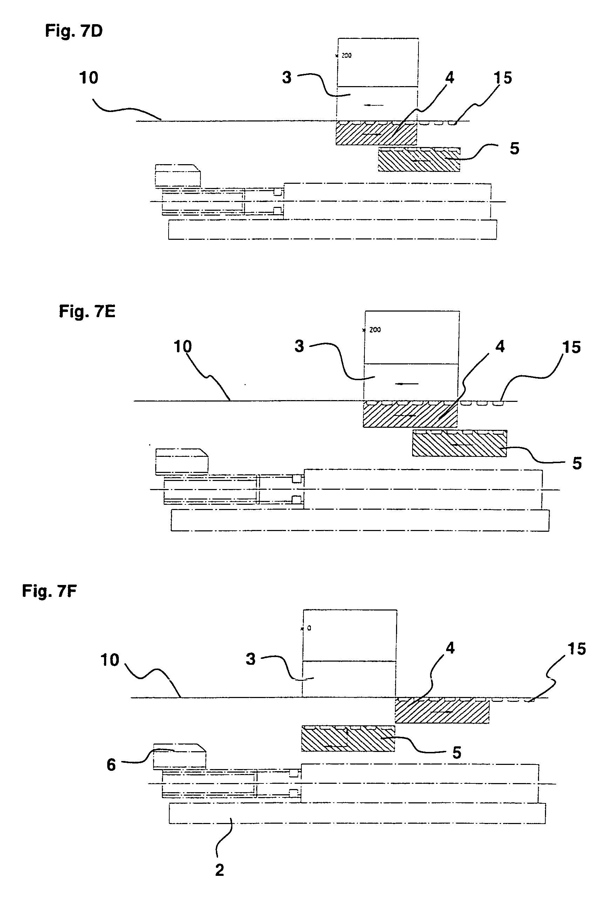

Insbesondere anhand der Figuren 7A bis 7F soll nachfolgend die Funktionsweise der vorstehend vorgestellten Formstation 1 erläutert werden.

Derartige Formstationen 1 werden in der Regel zusammenwirkend mit Thermoformmaschinen eingesetzt, von denen der Formstation 1 Thermofolien 10 aus beipielsweise PVC oder Polypropylen zugeführt werden. Für die in der Formstation 1 auszuführende Verformung der Formfolie 10 wird diese erwärmt, was in einer der Formstation 1 vorgelagerten Heizstation erfolgt, aber rein prinzipiell auch unmittelbar in der Formstation 1 durchgeführt werden kann. Zum Verformen der erwärmten Formfolie 10 werden das obere Formwerkzeug 3 und das erste untere Formwerkzeug 4 mit der Bewegung der kontinuierlich durch die Formstation 1 laufenden Formfolie 10 synchronisiert (Fig. 7A) und sodann zur Ausbildung der Näpfe 15 in der Formfolie 10 an dieser zur Anlage gebracht wird (Fig. 7B), wobei das erste untere Formwerkzeug 4 in die Arretiervorrichtung 9 einkoppelt ist. Um nach dem Formen der Formfolie 10 deren Gestalt zu stabilisieren, wird diese gekühlt, und zwar mittels des der Formfolie 10 anliegenden ersten unteren Formwerkzeuges 4, das die Bewegung der Formfolie 10 mit macht beziehungsweise bei dem erläuterten Ausführungsbeispiel sogar für den Antrieb der Formfolie 10 genutzt wird, so daß insgesamt die Formfolie 10 über einen langen Zeitraum direkten Kontakt mit dem ersten unteren Formwerkzeug 4 hat und während dieser Kontaktdauer bis auf Umgebungstemperatur abkühlt. Das obere Formwerkzeug 3 hebt sich in dieser Phase wieder von der Formfolie 10 ab und fährt in die Ausgangslage zurück (Fig. 7F). Erreicht das erste untere Formwerkzeug 4 mit der Formfolie 10 das Ende seines Verfahrweges, wird das erste untere Formwerkzeug 4 mittels der Hebe- und Absenkvorrichtung 7 nach unten verstellt, wozu das Zugorgan 14 in das erste untere Formwerkzeug 4 eingreift und dieses aus der Arretiervorrichtung 9 entnimmt, wenn die Hebe- und Absenkvorrichtung 7 sich nach unten verstellt. In dieser Situation wird das erste untere Formwerkzeug 4 in die Ausgangslage mittels des Horizontalantriebes 6 verfahren, in der es nach Synchronisieren mit der Bewegung der Formfolie 10 wieder nach oben verstellt werden kann. Das zweite untere Formwerkzeug 5 durchläuft den selben Zyklus phasenverschoben, wobei bei der Hubbewegung durch die Hebe- und Absenkvorrichtung 7, mit der das erste untere Formwerkzeug 4 zur Anlage an die Formfolie 10 gebracht wird, die obere Position der Hebe- und Absenkvorrichtung 7 ausgenutzt wird, um bei deren nachfolgenden Absenken das zweite untere Formwerkzeug 5 von der Formfolie 10 zu entfernen (Fig. 7C) und wieder in die Ausgangslage zurück fahren zu lassen (Fig. 7D).

Zu beachten ist, daß stets eines der unteren Formwerkzeuge 4, 5 in unmittelbaren Kontakt mit der Formfolie 10 steht, so daß ein unterbrechungsfreier Antrieb der Formfolie 10 mittels der unteren Formwerkzeuge 4, 5 gewährleistet ist, für den der zwischen der Formfolie 10 und dem anliegenden unteren Formwerkzeug 4, 5 herrschende Unterdruck sowie der Formschluß des anliegenden unteren Formwerkzeuges 4, 5 mit den in der Formfolie 10 ausgebildeten Näpfen 15 ausgenutzt wird.

## Patentansprüche

1. Verfahren zum Formen einer Formfolie (10), bei dem die Formfolie (10) erwärmt und durchgeführt wird durch eine Formstation (1) mit einem oberen Formwerkzeug (3), einem ersten unteren Formwerkzeug (4) und einem zweiten unteren Formwerkzeug (5), bei dem für einen ersten zu formenden Abschnitt das obere Formwerkzeug (3) und das erste untere Formwerkzeug (4) zur Horizontalbewegung der Formfolie (10) synchronisiert und vertikal relativ zueinander zum Formen zur Anlage an die Formfolie (10) verstellt sowie während des Formens mit der Formfolie (10) mitbewegt werden, bei dem das erste untere Formwerkzeug (4) während des nachfolgenden Kühlens der erwärmten Formfolie (10) mit dieser mitbewegt wird, während das obere Formwerkzeug (3) in die Ausgangslage zurück bewegt wird, und bei dem das zweite untere Formwerkzeug (5) für den nachfolgenden zu formenden Abschnitt die Funktion des ersten unteren Formwerkzeugs (4) übernimmt, während das erste untere Formwerkzeug (4) wie zuvor das zweite untere Formwerkzeug (5) an dem anderen unteren Formwerkzeug (4, 5) vorbei in die Ausgangslage zurück bewegt wird.

2. Verfahren nach Anspruch 1, **dadurch gekennzeichnet, daß** das der Formfolie (10) anliegende untere Formwerkzeug (4, 5) zur Kühlung der Formfolie (10) genutzt wird.

3. Verfahren nach Anspruch 1 oder 2, **dadurch gekennzeichnet, daß** das der Formfolie (10) anliegende untere Formwerkzeug (4, 5) zum Transport der Formfolie (10) genutzt wird.

4. Verfahren nach Anspruch 3, **dadurch gekennzeichnet, daß** die Formfolie (10) mittels eines Unterdrucks mit dem anliegenden unteren Formwerkzeug (4, 5) antriebsmäßig gekoppelt ist.

5. Verfahren nach Anspruch 3 oder 4, **dadurch gekennzeichnet, daß** der Formschluß des anliegenden unteren Formwerkzeugs (4, 5) mit den in der Formfolie (10) ausgebildeten Näpfen (15) für den Antrieb der Formfolie (10) ausgenutzt wird.

6. Formstation zur Ausführung des Verfahrens nach einem der Ansprüche 1 bis 5, **dadurch gekennzeichnet, daß** auf einem Stationsgestell (2) ein oberes Formwerkzeug (3) sowie ein erstes unteres Formwerkzeug (4) und ein zweites unteres Formwerkzeug (5) horizontal und vertikal verstellbar gelagert sind, daß jedem unteren Formwerkzeug (4, 5) ein eigener Horizontalantrieb (6) zugeordnet ist, daß den beiden unteren Formwerkzeuge (4, 5) für die Vertikalbewegung eine gemeinsame Hebe- und Absenkvorrichtung (7) sowie jeweils eine die unteren Formwerkzeuge (4, 5) in deren angehobener, der Formfolie (10) anliegender Lage sichernde Arretiervorrichtung (9) zugeordnet ist.

7. Formstation nach Anspruch 6, **dadurch gekennzeichnet, daß** die beiden den unteren Formwerkzeugen (4, 5) zugeordneten Horizontalantriebe (6) durch Servomotoren gebildet sind.

8. Formstation nach Anspruch 6 oder 7, **dadurch gekennzeichnet, daß** die Hebe- und Absenkvorrichtung (7) eine sich in Bewegungsrichtung der Formfolie (10) erstreckende Leiste (13) aufweist, an deren stromab liegenden Ende ein Zugorgan (14) zum Eingreifen in das entsprechend stromab bewegte untere Formwerkzeug (4, 5) ausgebildet ist.

9. Formstation nach Anspruch 8, **dadurch gekennzeichnet, daß** das Zugorgan (14) auf der Leiste (13) in Längsrichtung verstellbar angeordnet ist.

10. Formstation nach einem der Ansprüche 6 bis 9, **dadurch gekennzeichnet, daß** dem einen unteren Formwerkzeug (4) auf der linken Seite des Stationsgestells (2) und dem anderen unteren Formwerkzeug (5) auf der rechten Seite des Stationsgestells (2) eine Vertikalführung (8) zugeordnet ist.

11. Formstation nach Anspruch 10, **dadurch gekennzeichnet, daß** die Arretiervorrichtung (9) am oberen freien Ende der Vertikalführung (8) angeordnet und als Klemmvorrichtung gestaltet ist, bei der durch Zug das untere Formwerkzeug (4, 5) freigegeben wird.

12. Formstation nach Anspruch 1 oder 11, **dadurch gekennzeichnet, daß** der Vertikalführung (8) die Anschlüsse für die Kühlung (11) und die Unterdruckversorgung (12) des zugeordneten unteren Formwerkzeugs (4, 5) zugeordnet sind.
